# EUROPÄISCHE PATENTSCHRIFT

(11) **EP 1 577 918 B1**
(45) Veröffentlichungstag und Bekanntmachung des Hinweises auf die Patenterteilung: **14.12.2011**
(21) Anmeldenummer: 05003813.2
(22) Anmeldetag: 23.02.2005
(51) Int. Cl.: H01H 37/00, G08B 17/06, H02H 5/04

(54) **Anordnung zur Erfassung von lokal auftretenden Übertemperaturen**
Device for detecting locally appearing overtemperatures
Ensemble de détection de surchauffes se produisant localement

(30) Priorität: 20.03.2004 DE 102004013805
(43) Veröffentlichungstag der Anmeldung: 21.09.2005
(73) Patentinhaber: Schneider, Hans, 73312 Geislingen-Eybach (DE); Reich, Franz, 73072 Donzdorf (DE)
(72) Erfinder: Schneider, Hans, 73312 Geislingen-Eybach (DE); Reich, Franz, 73072 Donzdorf (DE)
(74) Vertreter: Dziewior, Joachim

(56) Entgegenhaltungen:
- EP-A1- 0 727 857
- WO-A-93/01640
- GB-A- 429 556
- GB-A- 764 657

## Beschreibung

Die Erfindung betrifft eine Übewachungsvorrichtung zur Erfassung von lokal auftretenden Übertemperaturen, mit einer aus einer elektrischen Reihenschaltung von mehreren Bimetallschaltern bestehenden Schalteranordnung, bei der die Bimetallschalter unterhalb einer wählbar vorgebbaren, bauartbedingten Schalttemperaturen geschlossen sind und bei Überschreitung der Schalttemperatur in den geöffneten Zustand umschalten, wobei die Bimetalschalter in linearer, flächenhafter oder auch räumlicher Form angeordnet sein können und in ihrer gegenseitgen Lage zueinander im wesentlichen fixiert sind.

Derartige Überwachungsvorrichtungen werden in vielfältigen Ausführungsformen benötigt, um bei Anlagen, Vorrichtungen und dergleichen, die insbesondere unter erhöhten Temperaturen betrieben werden, sicherzustellen, daß im Falle von Betriebsstörungen oder ähnlichem, die zu einem in der Regel lokalen Temperaturanstieg führen können, ein Alarm ausgelöst und insbesondere eine Abschaltung der gefährdenden Einrichtungen erfolgt.

Aus der WO 93/01640 ist eine Überwachungseinrichtung bekannt, die aus mehreren termisch ansprechenden Ausschaltern besteht, die in Reihe geschaltet sind und sich selbsttätig zurücksetzen, also nach entsprechender Abkühlung wieder einschalten. Diese Ausschalter dienen dazu, lokal auftretende Überhitzungen aufzuspühren, um dann abzuschalten.

Zusätzlich ist ein weiterer, zu den Ausschaltern in Reihe geschalteter Termoschalter vorgesehen, der durch ein Heizelement aktiviert wird, das parallel zu den ersten Ausschaltern angeordnet ist. Löst also einer der ersten Ausschalter aus, so wird hierdurch der Stromfluss zunächst nicht unterbrochen, sondern über den Heizkörper geführt, was zunächst zu einer Leistungsreduzierung im angeschlossenen Verbraucher führt. Bleibt die lokale Überhitzung erhalten, auf die der erste Ausschalter angesprochen hat, so führt nach einer gewissen Zeit die Erwärmung des Heizkörpers zu einem Abschalten des Termoschalters, wodurch dann der Stromkreis definitiv unterbrochen ist.

Der Erfindung liegt die Aufgabe zugrunde, eine derartige Überwachungsvorrichtung zu schaffen, die möglichst einfach und daher zuverlässig arbeitend aufgebaut ist und dabei auch nur lokal auftretende Überhitzungen zuverlässig erfasst.

Eine diese Aufgabe lösende Überwachungsvorrichtung ist dadurch gekennzeichnet, daß die Bimetallschalter ein irreversibles Schaltverhalteh aufweisen.

Der durch die Erfindung erreichte Vorteil besteht im wesentlichen darin, daß nach einer Auslösung der Überwachungsvorrichtung und dem dadurch bedingten Abkühlen der in Auslösung verursachenden Störungsstelle ein möglicherweise unbeabsichtigtes Wiedereinschalten verhindert wird, wobei insbesondere auch lokale Temperaturerhöhungen sehr zuverlässig berücksichtigt werden können, da bereits das Auslösen eines einzigen Bimetallschalters ausreicht, um die Überwachungsvorrichtung ansprechen zu lassen. Dies geschieht dadurch, daß der durch die Reihenanordnung der Bimetallschalter fließende Strom überwacht wird, der bereits dann unterbrochen wird, wenn nur einer der Bimetallschalter öffnet.

Um das irreversible Schaltverhalten zu erreichen, kann die Überwachungsvorrichtung auch mit einer selbsthaltenden Relaisschaltung versehen sein, die in vergleichbarer Weise verhindert, daß eine Wiedereinschaltung erfolgen kann.

Weiter besteht die Möglichkeit, mittels der erfindungsgemäßen Überwachungsvorrichtung auf unterschiedlich hohe kritische Temperaturen zu überwachen, in dem einzelne der in bestimmten Zonen angeordneten Bimetallschalter eine unterschiedliche Schalttemperatur aufweisen.

In besonders einfacher und daher im Rahmen der Erfindung bevorzugter Ausgestaltung sind die Bimetallschalter über elektrische Kabel miteinander verbunden und zusammen mit diesen von einer Isolierschicht umgeben. Dabei kann die Isolierschicht von einem Schlauch oder einem Rohr gebildet sein; ebenso besteht jedoch auch die Möglichkeit, daß die Isolierschicht von einer Kunststoffumspritzung gebildet ist.

Eine weitere Ausgestaltungsmöglichkeit besteht darin, daß die Isolierschicht von zwei die Bimetallschalter zwischen sich aufnehmenden Folien gebildet ist. Bei einer solchen Gestaltung besteht darüberhinaus die Möglichkeit, daß die elektrischen Verbindungen zwischen den Bimetallschaltern von auf den Folien aufgebrachten Leiterbahnen gebildet sind.

Eine bevorzugte Anwendung für die Überwachungsvorrichtung besteht bei elektrisch beheizten Behältern, insbesondere Behältern aus Kunststoff für galvanotechnische Anlagen, die in besonderem Maße empfindlich auf Überhitzungen reagieren. Hier wird im Rahmen der Erfindung vorgeschlagen, daß die Schalteranordnung sich zwischen den Heizelementen und der Wand der Behälter erstreckt. Auf diese Weise wird sichergestellt, daß auch bei fehlender Flüssigkeit des galvanischen Bades oder fehlerhaftem Regelverhalten der Heizung rechtzeitig eine Abschaltung der Heizelemente erfolgen kann, bevor diese Zerstörungen an der aus Kunststoff bestehenden Behälterwand verursachen.

Bei derartigen Vorrichtungen können jedoch auch an Kontaktelementen, soweit diese durch Oxidation erhöhte Übergangswiderstände aufweisen, unbeabsichtigt hohe Temperaturen auftreten, so daß es sich empfiehlt, daß die Schalteranordnung auch im Bereich der den Galvanisierstrom übertragenden Kontakte verläuft.

Eine weitere Anwendungsmöglichkeit besteht beispielsweise bei Kabeltrassen oder Kabelkanälen, die elektrische Kabel tragen. Je nach Anordnung und Auslegung dieser Kabeltrassen kann die Überwachungsvorrichtung linear oder auch flächenartig ausgebreitet sein, wobei es sich hier zusätzlich empfehlen kann, daß die Schalteranordnung auf gut wärmeleitenden Grundkörpern angeordnet ist. Hierdurch wird die Empfindlichkeit der Überwachungsvorrichtung zusätzlich erhöht.

Im folgenden wird die Erfindung an in der Zeichnung dargestellen Ausführungsbeispielen näher erläutert; es zeigen:
- Fig. 1: den Anmeldungsgegenstand in einer schematischen Darstellung als Stromlaufplan,
- Fig. 2: eine Anwendung der Überwachungsvorrichtung an einer galvanotechnischen Anlage,
- Fig. 3: eine Ausgestaltung der Überwachungsvorrichtung zur Anwendung bei Kabeltrassen,
- Fig. 4: eine detaillierte Darstellung des Anwendungsfalles nach Fig. 3.

Die in der Zeichnung dargestellte Überwachungsvorrichtung dient zur Erfassung von lokal auftretenden Übertemperaturen.

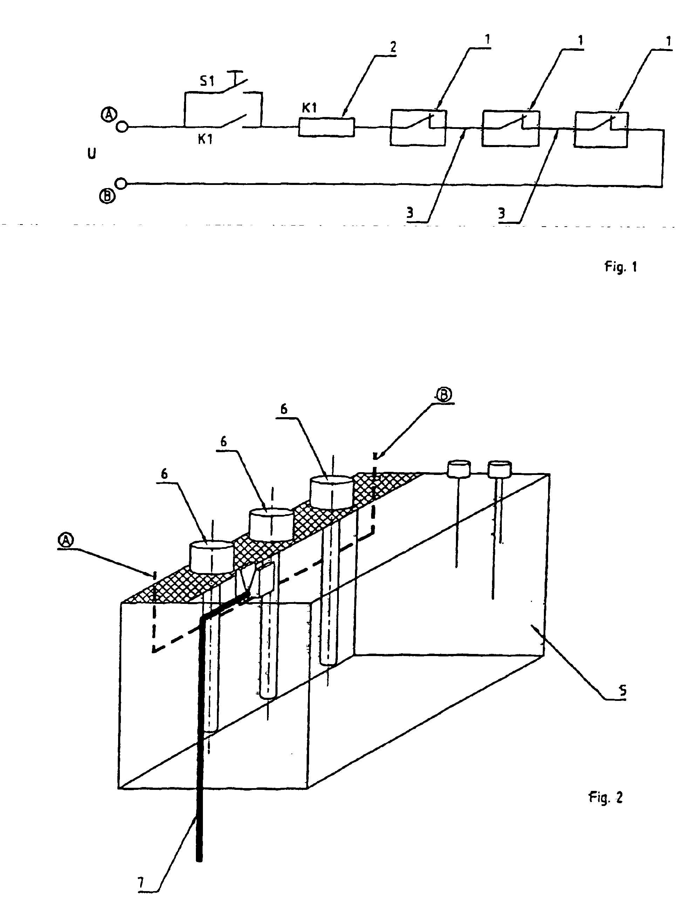

Sie besteht im einzelnen aus einer elektrischen Reihenschaltung von mehreren Bimetallschaltern 1, die gemeinsam eine Schalteranordnung gemäß Figur 1 bilden. Die Bimetallschalter 1 sind unterhalb einer entsprechend dem Anwendungsfall wählbar vorgebbaren Schalttemperatur geschlossen, wie dies in Figur 1 dargestellt ist.

Bei Überschreitung dieser Schalttemperatur gehen einer oder mehrere der Bimetallschalter 1 in den geöffneten Zustand über, wodurch der durch die Reihenschaltung der Bimetallschalter fließende Strom unterbrochen wird. Grundsätzlich bestünde hier auch die Möglichkeit, parallel zu jedem Bimetallschalter 1 einen der Größe nach gleichen Widerstand zu schalten; durch den Anstieg des Durchlasswiderstandes beim Öffnen einer oder mehrerer Schalter 1 könnte dann sogar ermittelt werden, ob es sich nur um eine punktuelle oder flächenmäßig größere Überhitzung handelt.

Die Bimetallschalter 1 sind dazu in linearer, flächenhafter oder auch räumlicher Form angeordnet und in noch im einzelnen zu beschreibender Weise in ihrer gegenseitigen Lage zueinander im wesentlichen fixiert.

Bei der in der Figur 1 dargestellten Schaltungsanordnung liegt ein selbsthaltend beschaltetes Relais 2 in Reihe zu den Bimetallschaltern 1, so daß bei einmaligem Öffnen einer der Schalter 1 der Relaiskontakt abfällt und - selbst nach dem erneuten Schließen des Bimetallschalters 1 - nicht wieder anzieht. Damit ist sichergestellt, daß in einem Fehlerfall zunächst eine Überprüfung vorgenommen werden kann. Dies kann in gleicher Weise auch dadurch erreicht werden, daß die Bimetallschalter 1 ein irreversibles Schaltverhalten aufweisen; dann jedoch ist es erforderlich, den ausgelösten Bimetallschalter 1 zu ersetzen.

Sofern mit einer einzigen Überwachungsvorrichtung verschiedene Bereiche auf unterschiedlich hohe Temperaturen überwacht werden sollen, besteht auch die Möglichkeit, daß die Bimetallschalter 1 entsprechend ihrer Überwachungsaufgabe eine unterschiedliche Schalttemperatur aufweisen.

Die Bimetallschater 1 sind, wie in Figur 1 angedeutet, über elektrische Kabel 3 miteinander verbunden und zusammen mit diesen von einer Isolierschicht umgeben. Die Isolierschicht kann dabei von einem Schlauch oder einem Rohr gebildet sein; ebenso besteht auch die Möglichkeit, daß die Isolierschicht von einer Kunststoffumspritzung gebildet ist.

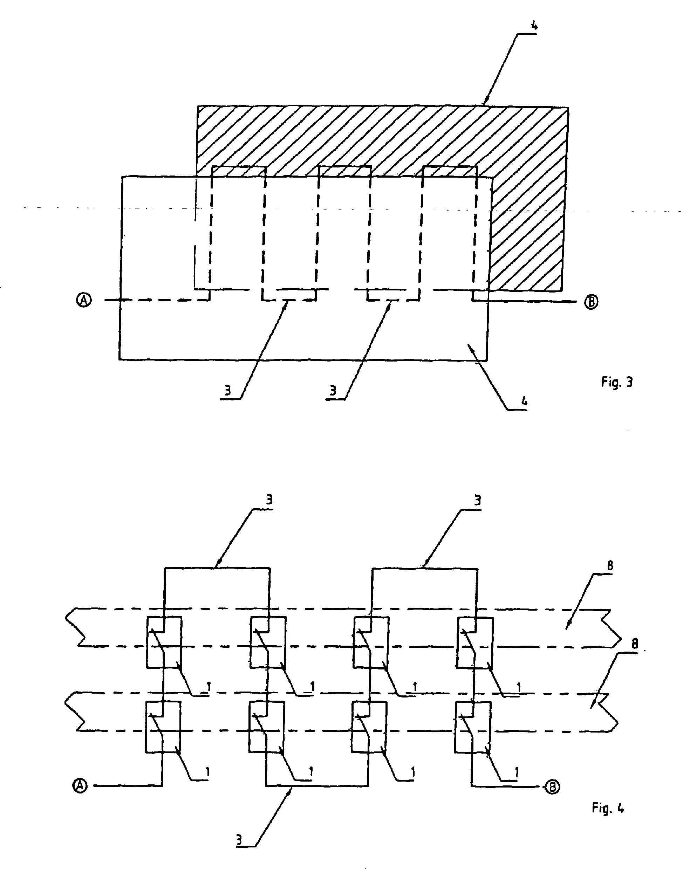

Sofern die Isolierschicht von zwei die Bimetallschalter zwischen sich aufnehmenden Folien 4 gebildet ist, wie dies in Figur 3 angedeutet ist, so können die elektrischen Verbindungen 3 zwischen den Bimetallschaltern 1 auch von auf den Folien 4 aufgebrachten Leiterbahnen gebildet sein.

In Figur 2 ist ein Anwendungsbeispiel für die Überwachungsvorrichtung dargestellt, bei der diese elektrisch beheizte Behälter 5 für galvanotechnische Anlagen überwacht. Da Kunststoffbehälter im Gegensatz zu Metallbehältern sensibel auf Temperaturerhöhungen reagieren, ist hier eine zusätzliche Sicherung gegenüber Übertemperaturen unumgänglich.

Die Schalteranordnung erstreckt sich hier zweckmäßigerweise zwischen den Heizelementen 6 und der Wand der Behälter 5, so daß Übertemperaturen frühzeitig zu einer Abschaltung führen, ehe eine Beschädigung der Behälterwand eintreten kann.

Zusätzlich kann eine Überwachung auch im Bereich der den Galvanisierstrom übertragenden Kontakte 7 verlaufen, da im Falle einer schlechten elektrischen Verbindung, die zum Beispiel durch eine Oxidation hervorgerufen werden kann, eine erhöhte Verlustwärme am Kontakt 7 entsteht. Dies kann im Extremfall ebenfalls zu Brandschäden führen.

Schließlich kann die Überwachungsvorrichtung auch im Bereich von Kabeltrassen 8 beziehungsweise Kabelkanälen eingesetzt werden, wobei auch hier wiederum eine individuelle Gestaltung der gegenseitigen Anordnung der Bimetallschalter 1 möglich ist. Zusätzlich kann hier jedoch die Schalteranordnung auch auf gut wärmeleitenden Grundkörpern angeordnet sein, so daß - gerade bei langen Kabeltrassen 8 - die Anzahl der zur Überwachung erforderlichen Bimetallschalter 1 in angemessenen Größen gehalten werden kann.

## Patentansprüche

1. Überwachungsvorrichtung zur Erfassung von lokal auftretenden Übertemperaturen, mit einer aus einer elektrischen Reihenschaltung von mehreren Bimetallschaltern (1) bestehenden Schalteranordnung, bei der die Bimetallschalter (1) unterhalb einer wählbar vorgebbaren, bauartbedingten Schalttemperatur geschlossen sind und bei Überschreitung der Schalttemperatur in den geöffneten Zustand umschalten, wobei die Bimetallschalter (1) in linearer, flächenhafter oder auch räumlicher Form angeordnet sein können und in ihrer gegenseitigen Lage zueinander im wesentlichen fixiert sind, **dadurch gekennzeichnet, daß** die Bimetallschalter (1) ein irreversibles Schaltverhalten aufweisen.

2. Überwachungsvorrichtung nach Anspruch 1, **dadurch gekennzeichnet, daß** einzelne der in bestimmten Zonen angeordneten Bimetallschalter (1) eine unterschiedliche Schalttemperatur aufweisen.

3. Überwachungsvorrichtung nach Anspruch 1 oder 2,
**dadurch gekennzeichnet, daß** die Bimetallschalter (1) über elektrische Kabel (3) miteinander verbunden und zusammen mit diesen von einer Isolierschicht umgeben sind.

4. Überwachungsvorrichtung nach Anspruch 3, **dadurch gekennzeichnet, daß** die Isolierschicht von einem Schlauch oder Rohr gebildet ist.

5. Überwachungsvorrichtung nach Anspruch 3, **dadurch gekennzeichnet, daß** die Isolierschicht von einer Kunststoffumspritzung gebildet ist.

6. Überwachungsvorrichtung nach Anspruch 3, **dadurch gekennzeichnet, daß** die Isolierschicht von zwei die Bimetallschalter (1) zwischen sich aufnehmenden Folien (4) gebildet ist.

7. Überwachungsvorrichtung nach Anspruch 6, **dadurch gekennzeichnet, daß** die elektrischen Verbindungen zwischen den Bimetallschaltern (1) von auf den Folien (4) aufgebrachten Leiterbahnen gebildet sind.

8. Überwachungsvorrichtung nach den Ansprüchen 1 bis 7 für elektrisch beheizte Behälter, insbesondere Behälter aus Kunststoff für galvanotechnische Anlagen, **dadurch gekennzeichnet, daß** die Schalteranordnung sich zwischen den Heizelementen und der Wand der Behälter (5) erstreckt.

9. Überwachungsvorrichtung nach Anspruch 8, **dadurch gekennzeichnet, daß** die Schalteranordnung auch im Bereich der den Galvanisierstrom übertragenden Kontakte (7) verläuft.

10. Überwachungsvorrichtung nach den Ansprüchen 1 bis 7 für elektrische Kabel tragende Kabeltrassen (8) oder Kabelkanäle, **dadurch gekennzeichnet, daß** die Schalteranordnung auf gut wärmeleitenden Grundkörpern angeordnet ist.

## Claims

1. A monitoring device for detecting locally occurring excessive temperatures, having a switch arrangement comprising an electrical series circuit of a plurality of bimetal switches (1), in which the bimetal switches (1) are closed below a selectably predeterminable switching temperature governed by the design involved and switch over into the opened condition when the switching temperature is exceeded, wherein the bimetal switches (1) can be arranged in linear, areal or also spatial form and are substantially fixed in their mutual position relative to each other, **characterised in that** the bimetal switches (1) have an irreversible switching characteristic.

2. A monitoring device according to claim 1 **characterised in that** individual ones of the bimetal switches (1) which are arranged in given zones have a different switching temperature.

3. A monitoring device according to claim 1 or claim 2 **characterised in that** the bimetal switches (1) are connected together by way of electric cables (3) and are enclosed together therewith by an insulating layer.

4. A monitoring device according to claim 3 **characterised in that** the insulating layer is formed by a hose or tube.

5. A monitoring device according to claim 3 **characterised in that** the insulating layer is formed by a plastic injection moulding therearound.

6. A monitoring device according to claim 3 **characterised in that** the insulating layer is formed by two films (4) accommodating the bimetal switches (1) between them.

7. A monitoring device according to claim 6 **characterised in that** the electric connections between the bimetal switches (1) are formed by conductor tracks provided on the films (4).

8. A monitoring device according to claims 1 to 7 for electrically heated containers, in particular containers of plastic material for electroplating installations, **characterised in that** the switch arrangement extends between the heating elements and the wall of the containers (5).

9. A monitoring device according to claim 8 **characterised in that** the switch arrangement also extends in the region of the contacts (7) carrying the electroplating current.

10. A monitoring device according to claims 1 to 7 for cable ducts or cable runs carrying electric cables (8), **characterised in that** the switch arrangement is arranged on base bodies which are good heat conductors.

## Revendications

1. Dispositif de surveillance pour la détection de surchauffes se produisant localement, avec une disposition d'interrupteurs constituée d'un branchement en série électrique de plusieurs interrupteurs à bilame (1), pour laquelle les interrupteurs à bilame (1) sont fermés en dessous d'une température de commutation sélectionnable pouvant être prédéfinie, liée au type de construction, et commutent dans l'état ouvert en cas de dépassement de la température de commutation, les interrupteurs à bilame (1) pouvant être disposés sous forme linéaire, surfacique ou également spatiale et être essentiellement fixés dans leur position mutuelle, **caractérisé en ce que** les interrupteurs à bilame (1) présentent un comportement de commutation irréversible.

2. Dispositif de surveillance suivant la revendication 1, **caractérisé en ce que** des interrupteurs à bilame (1) individuels, disposés dans des zones déterminées, présentent une température de commutation différente.

3. Dispositif de surveillance suivant la revendication 1 ou 2, **caractérisé en ce que** les interrupteurs à bilame (1) sont reliés entre eux à l'aide de câbles électriques (3) et sont entourés avec ceux-ci d'une couche d'isolation.

4. Dispositif de surveillance suivant la revendication 3, **caractérisé en ce que** la couche d'isolation est formée par un flexible ou un tube.

5. Dispositif de surveillance suivant la revendication 3, **caractérisé en ce que** la couche d'isolation est formée par un enrobage de matière plastique.

6. Dispositif de surveillance suivant la revendication 3, **caractérisé en ce que** la couche d'isolation est formée de deux films (4) accueillant entre eux les interrupteurs à bilame (1).

7. Dispositif de surveillance suivant la revendication 6, **caractérisé en ce que** les connexions électriques entre les interrupteurs à bilame (1) sont formées de pistes conductrices appliquées sur les films (4).

8. Dispositif de surveillance suivant les revendications 1 à 7 pour réservoirs avec chauffage électrique, en particulier des réservoirs en matière plastique pour des installations de galvanoplastie, **caractérisé en ce que** la disposition d'interrupteurs s'étend entre les éléments de chauffage et la paroi des réservoirs (5).

9. Dispositif de surveillance suivant la revendication 8, **caractérisé en ce que** la disposition d'interrupteurs s'étend également dans la zone des contacts (7) transmettant le courant de galvanisation.

10. Dispositif de surveillance suivant les revendications 1 à 7 pour goulottes à câbles (8) ou canaux à câbles supportant des câbles électriques, **caractérisé en ce que** la disposition d'interrupteurs est disposée sur des corps de base bons conducteurs de la chaleur.
